# EUROPÄISCHE PATENTSCHRIFT

(11) **EP 2 658 059 B1**
(45) Veröffentlichungstag und Bekanntmachung des Hinweises auf die Patenterteilung: **01.10.2014**
(21) Anmeldenummer: 12305463.7
(22) Anmeldetag: 23.04.2012
(51) Int. Cl.: H02G 15/34

(54) **Druckausgleichsystem für Kryostat**
Pressure equalisation system for cryostat
Système d'équilibrage pour cryostat

(43) Veröffentlichungstag der Anmeldung: 30.10.2013
(73) Patentinhaber: Nexans, 75008 Paris (FR)
(72) Erfinder: Schmidt, Frank, 30855 Langenhagen (DE)
(74) Vertreter: Döring, Roger

(56) Entgegenhaltungen:
- EP-A1- 2 328 156

## Beschreibung

Die vorliegende Erfindung betrifft eine Vorrichtung für ein Druckausgleichsystem für einen Kryostat, der Teil einer Kühlanlage für ein supraleitfähiges Kabelssystem ist, sowie ein Verfahren zum Betrieb des Druckausgleichsystems als Teil der Kühlanlage mit einem supraleitfähigen Kabel. Ein Kryostat weist um ein Innenvolumen eine Isolierung auf, beispielsweise mit zwei koaxialen Rohren, zwischen denen eine Isolierung, vorzugsweise eine Vakuumisolierung angeordnet ist. In dem Innenvolumen ist ein supraleitfähiger Leiter angeordnet und ein Kanal für den Durchtritt eines Kühlmediums, das insbesondere flüssiger Stickstoff oder flüssiges Helium ist. Das Innenvolumen des Kryostats kann mittels einer Zu- und einer Ableitung mit einem Vorratsbehälter für Kühlmittel verbunden sein, die einen Kühlmittelkreis mit dem Kryostat ausbilden. Der Vorratsbehälter für Kühlmittel ist vorzugsweise Teil einer Kühlanlage, die optional eine Kühleinrichtung aufweisen kann. Für den Ausgleich auftretender Druckschwankungen des Kühlmittels ist das Innenvolumen des Kryostats mittels einer ersten Leitung mit einem Druckausgleichsbehälter verbunden.

### Stand der Technik

Die EP 2328156 A1 beschreibt ein Verfahren zum Betrieb eines supraleitfähigen Kabels, dessen Kryostat durch eine Leitung mit einem Vorratsbehälter für Kühlmittel verbunden ist, wobei eine Überwachungseinheit vorgesehen ist, die bei einer Fehlermeldung für die Verletzung der Unversehrtheit des Kryostats die Zufuhr des Kühlmittels zum Kryostat sperrt.

Die US 3,946,141 beschreibt die Überwachung der Temperatur eines supraleitfähigen Kabels und die Steuerung von Ventilen in Kühlmittelleitungen, die eine Kreislaufleitung entlang des Kryostats bilden.

### Aufgabe der Erfindung

Die Aufgabe der Erfindung liegt in der Bereitstellung eines alternativen Druckausgleichsystems für Kryostate. Das alternative Druckausgleichsystem soll die Expansion von Kühlmittel in einen Druckausgleichsbehälter zulassen, der am Kryostat angeschlossen ist, insbesondere bei plötzlicher Volumenvergrößerung des Kühlmittels, und soll eingerichtet sein, bei Leckage den Austritt von Kühlmittel zu minimieren. Das Druckausgleichsystem soll bevorzugt eine minimierte Störanfälligkeit aufweisen und einen einfachen Aufbau haben.

### Allgemeine Beschreibung der Erfindung

Die Erfindung stellt ein Druckausgleichsystem mit einem einen Supraleiter enthaltenden Kryostat nach den Ansprüchen bereit. Das Druckausgleichssystem zeichnet sich dadurch aus, dass das Innenvolumen des Kryostats, das unter Druck stehendes Kühlmittel enthält, zusätzlich zu einer Kühlanlage, die mit einer Zuleitung für Kühlmittel, vorzugsweise mit einer Zu- und einer Ableitung für Kühlmittel mit dem Innenvolumen des Kryostats verbunden ist, einen Druckausgleichsbehälter aufweist, der mit einer ersten Leitung mit dem Innenvolumen des Kryostats verbunden ist. In der ersten Leitung ist ein Rückschlagventil angeordnet, das Strömung nur in Richtung aus dem Kryostat in den Druckausgleichsbehälter zulässt, insbesondere bei einem höheren Druck des Kühlmittels im Innenvolumen des Kryostats als im Druckausgleichsbehälter oder bei Druckausgleich. Das Rückschlagventil schließt zumindest bei höherem Druck innerhalb des Druckausgleichsbehälters als im Innenvolumen des Kryostats, optional bei gleichem Druck im Innenvolumen des Kryostats und im Druckausgleichsbehälter. Der Teil der Kühlanlage, der mit dem Innenvolumen des Kryostats verbunden ist, kann ein Vorratsbehälter für Kühlmittel sein oder einen Vorratsbehälter für Kühlmittel aufweisen.

Zusätzlich weist das Druckausgleichsystem eine zweite Leitung auf, die das Innenvolumen des Kryostats mit dem Druckausgleichsbehälter verbindet. Die zweite Leitung kann ohne Ventil sein und wahlweise einen Verdichter und/oder ein Steuerventil aufweisen.

Die erste Leitung dient dazu, bei Druckerhöhungen innerhalb des Innenvolumens des Kryostats Kühlmittels in den Druckausgleichsbehälter strömen zu lassen, beispielsweise bei schlagartig Volumenausdehnung des Kühlmittels innerhalb des Innenvolumens des Kryostats, beispielsweise von flüssigem Stickstoff, beispielsweise verursacht durch eine Temperaturerhöhung bei Kurzschlussstrom des supraleitfähigen Leiters. Das Rückschlagventil in der ersten Leitung erlaubt den Durchtritt des Kühlmittels, beispielsweise von flüssigem und gasförmigem Kühlmittel, nur aus dem Innenvolumen des Kryostats in den Druckausgleichsbehälter. Die zweite Leitung, die vorzugsweise einen geringeren Innenquerschnitt als die erste Leitung aufweist, z.B. einen Innenquerschnitt von 1 bis 50%, bevorzugter von 2 bis 20 oder bis 10% des Innenquerschnitts der ersten Leitung, erlaubt den Eintritt von Kühlmittel aus dem Druckausgleichsbehälter in das Innenvolumen des Kryostats.

Optional weist die zweite Leitung einen Verdichter auf, der eingerichtet ist, Kühlmittel aus dem Druckausgleichsbehälter in den Kryostat zu fördern. Bevorzugt ist der Druckausgleichsbehälter oberhalb des Kryostats angeordnet, z.B. um das Eintreten von Kühlmittel durch die zweite Leitung in das Innenvolumens des Kryostats allein unter Schwerkraft zu erlauben.

Bevorzugt ist die erste Leitung im Bodenbereich des Druckausgleichsbehälters angeschlossen und im oberen Bereich des Kryostats, der z.B. im wesentlichen horizontal angeordnet ist. Weiter bevorzugt ist die erste Leitung etwa vertikal zwischen dem Druckausgleichsbehälter und dem Kryostat angeordnet.

Die zweite Leitung ist bevorzugt mit dem Bodenbereich des Druckausgleichsbehälters verbunden, optional mit dem unteren, bevorzugt mit dem oberen Bereich des Kryostats.

Der Vorteil des erfindungsgemäßen Druckausgleichsystems liegt darin, dass es ein zuverlässiges Entweichen des Kühlmittels aus dem Kryostat durch die erste Leitung in den Druckausgleichsbehälter bei starkem Druckanstieg innerhalb des Kryostats erlaubt, während das Rückschlagventil ein Einströmen von Kühlmittel durch die erste Leitung in das Innenvolumen des Kryostats verhindert. Dies ist für den Fall wichtig, dass das Innenvolumen des Kryostats ein Leck aufweist, beispielsweise bei mechanischer Beschädigung von außen. Denn das innerhalb des Kryostats unter Druck stehende Kühlmittel entweicht durch ein Leck, wobei ein ungehinderter Zufluss von Kühlmittel aus dem Druckausgleichsbehälter durch eine erste Leitung mit großem Querschnitt durch das Rückschlagventil verhindert wird. Der geringere Querschnitt der zweiten Leitung lässt einerseits das Einströmen von Kühlmittel bei Überdruck aus dem Druckausgleichsbehälter in den Kryostat zu, begrenzt andererseits jedoch effektiv bei einer Leckage den möglichen Volumenstrom aus dem Druckausgleichsbehälter in den Kryostat. Der Vorteil des erfindungsgemäßen Druckausgleichsystems liegt darin, dass es ohne gesteuerte Absperrorgane und ohne Sensoren, deren Signal die Absperrorgane ansteuern, eine Begrenzung des Ausströmens von Kühlmittel aus dem Druckausgleichsbehälter in den Kryostat bewirkt und den Ausgleich von plötzlich innerhalb des Kryostats auftretenden Druckerhöhungen in den Druckausgleichsbehälter erlaubt.

Entsprechend kann das Druckausgleichsystem aus einem mittels einer ersten Leitung mit dem Innenvolumen des Kryostats verbundenen Druckausgleichsbehälter bestehen, wobei in der ersten Leitung ein Rückschlagventil angeordnet ist, das den Durchtritt von Kühlmittel nur in Richtung in den Druckausgleichsbehälter zulässt, und einer zweiten Leitung, die den Druckausgleichsbehälter mit dem Innenvolumen des Kryostats verbindet, die einen geringeren Querschnitt als die erste Leitung aufweist.

In bevorzugter Ausfiihrungsform ist in der zweiten Leitung ein gesteuertes Absperrventil angeordnet, das von einem Signal eines Sensors ansteuert ist, der die Unversehrtheit des Kryostats anzeigt. Der Sensor kann beispielsweise ein Drucksensor sein, der eingerichtet ist, bei Störung des Vakuums innerhalb der Vakuumisolierung des Kryostats ein Steuersignal an das in der zweiten Leitung angeordnete Ventil zu senden. Vorzugsweise ist das Ventil in der zweiten Leitung ein Absperrventil. Optional alternativ oder zusätzlich zu einem in der zweiten Leitung angeordneten gesteuerten Absperrventil kann in der zweiten Leitung ein gesteuerter Verdichter angeordnet sein, der insbesondere wie ein Absperrventil durch ein Signal des Sensors gesteuert ist, der die Unversehrtheit des Kryostats anzeigt. Ein Absperrventil und/oder ein Verdichter in der zweiten Leitung sind eingerichtet, die Kühlmittelströmung bei einem Steuersignal für das Fehlen der Unversehrtheit des Kryostats zu sperren. Ein solches Steuersignal für das Fehlen der Unversehrtheit des Kryostats ist z.B. durch einen Druckanstieg innerhalb der Vakuumisolierung des Kryostats ausgelöst.

### Genaue Beschreibung der Erfindung

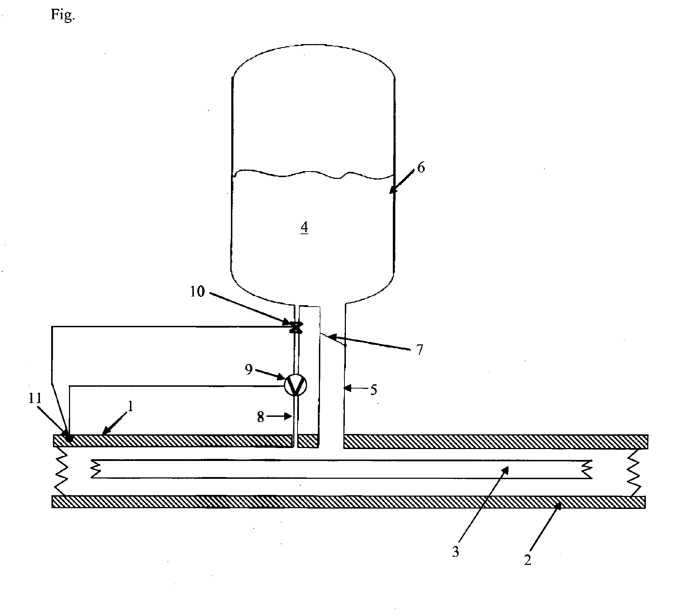

Die Erfindung wird nun genauer mit Bezug auf die Figur beschrieben, die schematisch das Druckausgleichsystem zeigt.

Ein Kryostat, der zwischen zwei beabstandeten Rohren eine Isolierung aufweist, die vorzugsweise eine Vakuumisolierung 2 ist, enthält in seinem Innenvolumen einen Supraleiter 3. Eine Zu- und Ableitung für Kühlmittel 4 im Kreislauf zu einem Vorratsbehälter einer Kühlanlage ist nicht gezeigt.

Das Innenvolumen des Kryostats 1 und eine erste Leitung 5, die das Innenvolumen des Kryostats 1 mit dem Druckausgleichsbehälter 6 verbindet, sind mit Kühlmittel 4 gefüllt, wobei der Druckausgleichsbehälter 6 im Verfahren in einem Volumenanteil gasförmigen Kühlmittels 4 enthält, wie in der Figur als obere Hälfte oberhalb des Flüssigkeitsspiegels angedeutet ist.

In der ersten Leitung 5 ist ein Rückschlagventil 7 angeordnet, das ausschließlich aus Richtung aus dem Innenvolumen des Kryostats 1 bzw. in den Druckausgleichsbehälter 6 durchströmbar ist. Entsprechend der bevorzugten Ausführungsform ist der Kryostat 1 etwa horizontal angeordnet, der Druckausgleichsbehälter 6 ist oberhalb des Kryostats angeordnet und die erste Leitung 5 ist etwa vertikal zwischen dem Kryostat 1 und dem Boden des Druckausgleichsbehälters 6 angeordnet.

Generell kann ein Rückschlagventil 7 ein nur einseitig durchströmbares Klappenventil oder Rückschlagventil sein oder ein nur einseitig durchströmbares gesteuertes Ventil.

Die zweite Leitung 8 weist einen geringeren Querschnitt als die erste Leitung 5 auf und verbindet das Innenvolumen des Kryostats 1 mit dem Druckausgleichsbehälter 6. Eine optionale Zulaufpumpe 9 und/oder ein Absperrventil 10 können in der zweiten Leitung 8 angeordnet sein. Die Zulaufpumpe 9 und/oder das Absperrventil 10 sind vorzugsweise vom Signal eines Sensors 11 abhängig gesteuert, der bei Schädigung, insbesondere bei Leckage des Kryostats 1 das Schließen des Absperrventils 10 und/oder ein Stopp der Zulaufpumpe 9 steuert, um die zweite Leitung 8 zu sperren. Entsprechend der bevorzugten Ausführungsform ist der Sensor 11 als druckempfindlicher Sensor dargestellt, der eingerichtet ist, bei Druckanstieg innerhalb der Vakuumisolierung 2 des Kryostats 1 ein Signal für das Fehlen von dessen Unversehrtheit zu erzeugen.

### Bezugszeichenliste:

- 1: Kryostat
- 2: Vakuumisolierung
- 3: Supraleiter
- 4: Kühlmittel
- 5: erste Leitung
- 6: Druckausgleichsbehälter
- 7: Rückschlagventil
- 8: zweite Leitung
- 9: Zulaufpumpe
- 10: Absperrventil
- 11: Sensor

## Patentansprüche

1. Kryostat (1), der einen supraleitfähigen Leiter (3) in einem Innenvolumen aufweist, das mittels einer Zuleitung mit einer Kühlanlage verbunden ist und mit einer ersten Leitung (5) mit einem Druckausgleichsbehälter (6) verbunden ist, **dadurch gekennzeichnet, dass** innerhalb der ersten Leitung (5) ein nur aus Richtung aus dem Innenvolumen des Kryostats (1) in den Druckausgleichsbehälter (6) durchströmbares Rückschlagventil (7) angeordnet ist und der Druckausgleichsbehälter (6) mit einer zweiten Leitung (8) mit dem Kryostat (1) verbunden ist.

2. Kryostat (1) nach Anspruch 1, **dadurch gekennzeichnet, dass** die zweite Leitung (8) einen Innenquerschnitt von maximal 50% des Innenquerschnitts der ersten Leitung (5) aufweist.

3. Kryostat (1) nach einem der voranstehenden Ansprüche, **dadurch gekennzeichnet, dass** der Kryostat (1) eine Vakuumisolierung (2) um sein Innenvolumen aufweist.

4. Kryostat (1) nach einem der voranstehenden Ansprüche, **dadurch gekennzeichnet, dass** in der zweiten Leitung (8) ein steuerbares Absperrventil (10) angeordnet ist und der Kryostat (1) einen Sensor (11) aufweist, der eingerichtet ist, bei Fehlen der Unversehrtheit des Kryostats (1) ein Signal zum Sperren an das Absperrventil (10) zu übermitteln.

5. Kryostat (1) nach einem der voranstehenden Ansprüche, **dadurch gekennzeichnet, dass** in der zweiten Leitung (8) ein Verdichter angeordnet ist, der eingerichtet ist, Kühlmittel (4) aus dem Druckausgleichsbehälter (6) in den Kryostat (1) zu fördern und eingerichtet ist, die zweite Leitung (8) abhängig vom Signal eines Sensors (11) zu blockieren, der eingerichtet ist, bei Fehlen der Unversehrtheit des Kryostats (1) ein Signal zum Stopp des Verdichters in der zweiten Leitung (8) zu übermitteln.

6. Kryostat (1) nach einem der Ansprüche 3 bis 5, **dadurch gekennzeichnet, dass** der Sensor (11) eingerichtet ist, bei einem Druckanstieg innerhalb der Vakuumisolierung (2) des Kryostats (1) ein Signal für das Fehlen der Unversehrtheit des Kryostats (1) zu übermitteln.

7. Kryostat (1) nach einem der voranstehenden Ansprüche, **dadurch gekennzeichnet, dass** die Kühlanlage einen Vorratsbehälter aufweist, der mittels einer Rückleitung mit dem Innenvolumen des Kryostats (1) verbunden ist und in der Zuleitung und/oder in der Rückleitung ein Verdichter angeordnet ist.

8. Verfahren zum Betrieb eines Kryostats (1), in dessen Innenvolumen ein Supraleiter (3) angeordnet ist, das mittels einer Zuleitung mit Kühlmittel (4) aus einer Kühlanlage beaufschlagt wird und dessen Innenvolumen zum Druckausgleich mittels einer ersten Leitung (5) mit einem Druckausgleichsbehälter (6) verbunden ist, **dadurch gekennzeichnet, dass** das Innenvolumen des Kryostats (1) mittels einer zweiten Leitung (8) mit dem Druckausgleichsbehälter (6) verbunden ist und in der ersten Leitung (5) ein Rückschlagventil (7) angeordnet ist, das nur aus dem Innenvolumen des Kryostats (1) in den Druckausgleichsbehälter (6) durchströmbar ist.

9. Verfahren nach Anspruch 8, **dadurch gekennzeichnet, dass** in der zweiten Leitung (8) ein gesteuertes Absperrventil (10) angeordnet ist und am Kryostat (1) ein Sensor (11) angeordnet ist, der bei Fehlen der Unversehrtheit des Kryostats (1) ein Signal für das Fehlen der Unversehrtheit des Kryostats (1) an das Absperrventil (10) übermittelt und das Absperrventil (10) bei Erhalt dieses Signals sperrt.

10. Verfahren nach einem der Ansprüche 8 bis 9, **dadurch gekennzeichnet, dass** der Kryostat (1) eine Vakuumisolierung (2) um sein Innenvolumen aufweist und der Sensor (11) eingerichtet ist, bei einem Druckanstieg innerhalb der Vakuumisolierung (2) ein Signal für das Fehlen der Unversehrtheit des Kryostats (1) zu erzeugen.

## Claims

1. A cryostat (1), which surrounds a superconductive conductor (3) and which is connected to a cooling device especially to a pressure-equalizing reservoir (6) by a first tube (5), **characterized in that** a relief valve (7) is positioned within the first tube (5) which is open in the direction from the cryostat (1) to the reservoir (6) only and the reservoir (6) is connected to the cryostat (1) also by a second tube (8).

2. A cryostat (1) according to claim 1, **characterized in that** the inner cross-section of the second tube (8) is at most 50 % of the cross-section of the first tube (5).

3. A cryostat (1) according to one of preceding claims, **characterized in that** the cryostat (1) has a vacuum insulation (2) surrounding its inner volume.

4. A cryostat (1) according to one of the preceding claims, **characterized in that** a controllable shutoff valve (10) is positioned within the second tube (8) and the cryostat (1) having a sensor (11), which gives a signal to the shutoff valve (10) when the cryostat (1) is not intact.

5. A cryostat (1) according to one of the preceding claims, **characterized in that** a compressor is positioned within the second tube (8), by which a coolant (4) is fed from the pressure-equalizing reservoir (6) into the cryostat (1) and by which the second tube (8) is blocked depending on a signal of the sensor (11) which stops the compressor, when the cryostat (1) is not intact.

6. A cryostat (1) according to one of the claims 3 to 5, **characterized in that** the sensor (11) gives a signal in case of an increasing pressure in the vacuum insulation (2) of the cryostat (1), showing that the cryostat (1) is not intact.

7. A cryostat (1) according to one of the preceding claims, **characterized in that** the cooling device has a storage bunker which is connected by a return tube to the inner volume of the cryostat (1) and a compressor being positioned in the first tube and/or in the return tube.

8. Method for the operation of a cryostat (1) in the inner volume of which a superconductor (3) is positioned, to which a coolant (4) from a cooling device is guided through a tube and the inner volume of which for the purpose of a pressure equalization is connected to a pressure-equalizing reservoir (6) by a first tube (5), **characterized in that** the inner volume of the cryostat (1) is connected by a second tube (8) to the pressure-equalizing reservoir (6) and a relief valve (7) is positioned within the first tube (5) which is open in the direction from the cryostat (1) to the reservoir (6) only.

9. Method according to claim 8, **characterized in that** a controllable shutoff valve (10) is positioned within the second tube (8) and the cryostat (1) having a sensor (11), which gives a signal to the shutoff valve (10) when the cryostat (1) is not intact and which closes the shutoff valve (10) after receipt of the signal.

10. Method according to one of the claims 8 to 9, **characterized in that** the cryostat (1) has a vacuum insulation (2) surrounding its inner volume and the sensor (11) gives a signal in case of an increasing pressure in the vacuum insulation (2), showing that the cryostat (1) is not intact.

## Revendications

1. Cryostat (1) qui présente dans un volume intérieur un conducteur supraconducteur (3) raccordé par une amenée à une installation de refroidissement et par un premier conduit (5) à un récipient (6) d'équilibrage de pression, **caractérisé en ce que** une soupape anti-retour (7) qui ne peut être traversée que dans la direction de sortie du volume intérieur du cryostat (1) en direction du récipient (6) d'équilibrage de pression est disposée dans le premier conduit (5) et le récipient (6) d'équilibrage de pression est raccordé au cryostat (1) par un deuxième conduit (8).

2. Cryostat (1) selon la revendication 1, **caractérisé en ce que** la section transversale intérieure du deuxième conduit (8) représente au maximum 50 % de la section transversale intérieure du premier conduit (5).

3. Cryostat (1) selon l'une des revendications précédentes, **caractérisé en ce que** le cryostat (1) présente une isolation sous vide (2) autour de son volume intérieur.

4. Cryostat (1) selon l'une des revendications précédentes, **caractérisé en ce qu'**une soupape asservie de blocage (10) est disposée dans le deuxième conduit (8) et le cryostat (1) présente un capteur (11) conçu pour transmettre à la soupape de blocage (10) un signal de blocage en cas de défaut d'intégrité du cryostat (1).

5. Cryostat (1) selon l'une des revendications précédentes, **caractérisé en ce qu'**un compresseur conçu pour refouler dans le cryostat (1) un fluide de refroidissement (4) provenant du récipient (6) d'équilibrage de pression et conçu pour bloquer le deuxième conduit (8) en fonction du signal d'un capteur (11) conçu pour transmettre un signal d'arrêt du compresseur disposé dans le deuxième conduit (8) en cas de défaut d'intégrité du cryostat (1) est disposé dans le deuxième conduit (8).

6. Cryostat (1) selon l'une des revendications 3 à 5, **caractérisé en ce que** le capteur (11) est conçu pour transmettre un signal de défaut d'intégrité du cryostat (1) en cas d'augmentation de pression à l'intérieur de l'isolation sous vide (2) du cryostat (1).

7. Cryostat (1) selon l'une des revendications précédentes, **caractérisé en ce que** l'installation de refroidissement présente un récipient de réserve raccordé au volume intérieur du cryostat (1) au moyen d'un conduit de retour et **en ce qu'**un compresseur est disposé dans le conduit d'amenée et/ou dans le conduit de retour.

8. Procédé de conduite d'un cryostat (1) dans le volume intérieur duquel un supraconducteur (3) alimenté au moyen d'un conduit d'amenée par un fluide de refroidissement (4) provenant d'une installation de refroidissement et dont le volume intérieur est raccordé à un récipient (6) d'équilibrage de pression au moyen d'un premier conduit (5) prévu pour l'équilibrage de la pression est disposé, **caractérisé en ce que** le volume intérieur du cryostat (1) est raccordé au récipient (6) d'équilibrage de pression au moyen d'un deuxième conduit (8) et une soupape anti-retour (7) qui ne peut être traversée que dans le sens allant du volume intérieur du cryostat (1) au récipient (6) d'équilibrage de pression est disposée dans le premier conduit (5).

9. Procédé selon la revendication 8, **caractérisé en ce qu'**une soupape asservie de blocage (10) est disposée dans le deuxième conduit (8) et un capteur (11) qui en cas de défaut d'intégrité du cryostat (1) transmet à la soupape de blocage (10) un signal de défaut d'intégrité du cryostat (1) est bloque la soupape de blocage (10) lors de la réception de ce signal sur le cryostat (1).

10. Procédé selon l'une des revendications 8 et 9, **caractérisé en ce que** le cryostat (1) présente une isolation sous vide (2) autour de son volume intérieur et **en ce que** le capteur (11) est conçu pour former un signal de défaut d'intégrité du cryostat (1) en cas d'augmentation de pression à l'intérieur de l'isolation sous vide (2).
